(19) Europäisches Patentamt
European Patent Office
Office européen des brevets

(11) **EP 4 764 419 A1**

(12) **EUROPEAN PATENT APPLICATION**

(43) Date of publication:
**24.06.2026 Bulletin 2026/26**

(51) International Patent Classification (IPC):
**G01D 5/14** (2006.01)

(21) Application number: **24221870.9**

(22) Date of filing: **19.12.2024**

(52) Cooperative Patent Classification (CPC):
**G01D 5/145;** G01D 2205/24; G01D 2205/40

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicants:
- **TE Connectivity Smart Grid GmbH**
  **44227 Dortmund (DE)**
- **TE Connectivity Solutions GmbH**
  **8200 Schaffhausen (CH)**

(72) Inventors:
- **BARTOS, Axel**
  **44227 Dortmund (DE)**
- **SCHAPENDONK, Edwin**
  **8200 Schaffhausen (CH)**

(74) Representative: **Patentanwaltskanzlei WILHELM & BECK**
  **Prinzenstraße 13**
  **80639 München (DE)**

Remarks:
Amended claims in accordance with Rule 137(2) EPC.

(54) **MAGNETIC ANGLE SENSOR DEVICE AND METHOD USING THE MAGNETIC ANGLE SENSOR DEVICE**

(57)     The invention relates to a magnetic angle sensor device (15) and a method, wherein the magnetic angle sensor device comprises a sensor array (45) and an indication element (40), which is arranged to rotate about a rotational axis (30), wherein the indication element (40) comprises a first section (65) and a second section (70), wherein the first section (65) is arranged on the inside of the second section (70), wherein the first section (65) comprises a first arrangement (90) with a plurality of first permanent magnetic sections (95) and the second section (70) comprises a second arrangement (116) with at least a second permanent magnetic section (120), wherein each of the first permanent magnetic sections (95) has a first magnetization, wherein the first permanent magnetic sections (95) of the first arrangement (90) are arranged periodically in circumferential direction with respect to the rotational axis (30), so that the first arrangement (90) provides a multi-pole magnetic field (145), wherein the second permanent magnetic section (120) has a second magnetization, so that the second arrangement (116) provides a homogenous magnetic field (150), wherein the multi-pole magnetic field (145) and the homogenous magnetic field (150) interact in an arrangement area (55) at the indication element (40) to an overall magnetic field (180), wherein the sensor array (45) is arranged in the arrangement area (55) to detect the overall magnetic field (180) and is embodied to generate a sensor signal in response to a circumferential orientation of the indication element (40).

Fig. 2

**Description**

The invention relates to a magnetic angle sensor device according to claim 1 and a method according to claim 12.

WO 2022/152996 teaches a contactless position sensor comprising a permanent magnet. The sensor comprises a permanent magnet providing a magnetic field and a magnetic field detection element in at least two directions. The permanent magnet is able to move in a direction of a displacement and the permanent magnet comprises a magnetization which varies continuously in the direction of the displacement.

US 2008/0231262 A1 teaches an indicator element for a magnetic rotation angle sensor having a field probe for generating a sensor signal in response to a geometric position of the indicator element relative to the field probe. The indicator element has a permanent magnet with an annular cross-section having a plurality of segments, the magnetization of the segments being in different directions so that a homogeneous magnetic field is formed in an inner region of the indicator element into which the field probe is arranged. Two segments exhibit radial or diametrical magnetization and at least two segments exhibit lateral magnetization.

It is the object of the invention to provide an improved magnetic angle sensor device and an improved method.

This object is solved by the features of a magnetic angle sensor device according to claim 1 and a method according to claim 12.

An improved magnetic angle sensor device comprises a sensor array and an indication element, which is arranged to rotate about a rotational axis. The indication element comprises a first section and a second section. The first section is arranged on the inside of the second section. The first section comprises a first arrangement with a plurality of first permanent magnetic sections and the second section comprises a second arrangement with at least a second permanent magnetic section. Each of the first permanent magnetic sections has a first magnetization pattern. The first permanent magnetic sections of the first arrangement are arranged periodically in circumferential direction with respect to the rotational axis, so that the first arrangement provides a multi-pole magnetic field in an arrangement area. The second permanent magnetic section has a second magnetization pattern, so that the second arrangement provides a homogenous magnetic field in the arrangement area. The multi-pole magnetic field and the homogenous magnetic field interact in the arrangement area to an overall magnetic field. The sensor array is arranged in the arrangement area to detect the overall magnetic field and is embodied to provide at least an information in response to a circumferential orientation of the indication element.

The magnetic angle sensor device has the advantage that the circumferential orientation of the indication element may be detected quickly and precisely and that the magnetic angle sensor device is very robust with regard to its environmental conditions. Therefore, the magnetic angle sensor device may be used in an end-of-shaft arrangement or an out-of-shaft arrangement to detect the position of a rotary element in various applications.

In a further embodiment, the second arrangement is a Halbach-arrangement of the second permanent magnetic section or is a dipole arrangement of the second permanent magnetic section. This embodiment has the advantage that the homogenous magnetic field provided is highly uniform in the arrangement area.

In a further embodiment, the indication element comprises a third section which is ring-shaped. The third section is arranged radially on the outside of the second section and the second section is in contact with the third section. The third section outwardly shields the second section. This design has the advantage that in harsh environments, the overall magnetic field is shielded by the third section and the measurement of the sensor array is not disturbed, for example by further magnetic fields which are shielded by the third section.

In a further embodiment, the indication element comprises a matrix material and a magnetizable filler material. The magnetizable filler material is embedded in the matrix material. The magnetizable filler material preferably comprises at least hard ferrite and/or NdFeB and/or SmCo. The matrix material and the magnetizable filler material extend over the first section and the second section of the indication element, wherein the matrix material is made from a one-piece and uniform material. Preferably, the matrix material may, for example, comprise a plastic material or a resin. The first section and the second section may be easily produced in this embodiment by magnetizing the magnetizable filler material to produce the first and the second section.

In a further embodiment the filler material in the first section is magnetized with the first magnetic pattern and the filler material in the second section is magnetized with the second magnetic pattern. This embodiment has the advantage that the indication element can be made from one piece and can be easily magnetized according to the preferences and/or the resolution needed for the intended use of the indication element.

The third section comprises a soft magnetic material preferably a steel, preferable a soft steel. The third section is preferably made from a one-piece and uniform material and extends completely around the second section in circumferential direction with respect to the rotational axis. With the aid of the steel, preferably the soft steel, the first and second section are ideally shielded.

In a further embodiment, the indication element is disc-shaped or ring-shaped. The sensor array is arranged radially between the rotational axis and the first section. This arrangement has the advantage that the sensor array is shielded by the first and the second section. Therefore, the sensor array provides a good signal which corresponds to the circumferential orientation of the indication element.

The overall magnetic field comprises a first magnetic field area and a second magnetic field area, wherein the first magnetic field area is arranged radially inwards at the rotational axis and the second magnetic field area is arranged radially outwards with regard to the first magnetic field area. In the first magnetic field area, the overall magnetic field is essentially homogeneous. The sensor array is arranged in the second magnetic field area. This has the advantage that the circumferential orientation of the indication element with respect to the sensor array may be precisely detected by the sensor array.

In a further embodiment, the sensor array comprises at least a first sensor element, a second sensor element and a third sensor element, wherein the sensor elements are arranged on a circle around the rotational axis. Each sensor element is embodied to provide at least sensor signal, preferably two sensor signals corresponding to the overall magnetic field at the corresponding sensor element. With the aid of the three sensor elements, the detection of the orientation of the indication element is very precise.

In a further embodiment may the first sensor element is arranged in circumferential direction in an identical sensor angle between the second sensor element and the third sensor element with respect to the rotational axis, wherein the first pole and the second pole of the first permanent magnetic section extend in circumferential direction in a pole extension with respect to the rotational axis, wherein the sensor angle is identical to the pole extension.

In a further embodiment the first pole and/or the second pole of the first permanent magnetic section extend in circumferential direction with a pole width, wherein the arrangement area is arranged in distance to the first permanent magnetic section, wherein preferably the arrangement area is at least arranged in a distance of 0,1 of the pole width, wherein preferably an inner maximum extend of the arrangement area with respect to the first permanent magnetic section is preferable less than 0,5 the pole width.

An improved method using the above described magnetic angle sensor device for determining a circumferential orientation of a rotation element with respect to a rotational axis may be provided by providing the above described magnetic angle sensor device. The rotation element is connected to the indication element. The sensor array provides at least a sensor signal, and an rotational angle of the indication element with respect to a reference orientation is determined on the basis of the sensor signal, wherein an information regarding the rotational angle is provided.

In a further embodiment, each of the first to third sensor elements provides two sensor signals, wherein a vector average of the overall magnetic field at the sensor array is determined on the basis of the two sensor signals of the second sensor element and the two sensor signals the third sensor element, wherein a vector sum at the first sensor element is determined on the basis of a sum of the sensor signals of the first sensor element and the vector average, wherein a summarized rotational angle is determined on the basis of an arctangent of the vector sum.. The summarized rotational angle corresponds to the orientation of the homogenous magnetic field in the arrangement area. The summarized rotational angle may be provided by the magnetic angle sensor device and may be used for quickly determining the orientation of the indication element, for example, if the rotation element rotates with high RPM.

In a further embodiment a vector difference at the first sensor element is determined on basis of the sensor signals of the first sensor element and the vector average wherein a differential rotational angle is determined based on an arctangent of the vector difference. . The differential rotational angle may be used to precisely determine the rotational angle of the indication element with respect to a reference orientation.

The invention is described in conjunction with the following figures, in which

Figure 1    teaches a schematic view of a system;

Figure 2    shows a perspective view of an embodiment of an indication element of the system shown in Figure 1;

Figure 3    shows a front view of the magnetic angle sensor device;

Figure 4a   shows a front view of the indication element with the multi-pole magnetic field provided by a first arrangement of the indication element;

Figure 4b   shows a front view of the indication element with the homogenous magnetic field provided by a second arrangement of the indication element;

Figure 4c   shows a front view of the indication element with an overall magnetic field;

Figure 5    shows an unfolded view of an area A marked in Figure 3;

Figure 6    shows a flow chart of a method to determine a rotational angle with the system described in the figures 1 to 5;

Figure 7    shows a diagram showing the direction of the overall magnetic field on the circle;

Figure 8    shows a diagram showing a summarized vector sum over the rotational angle;

Figure 9     shows a diagram of an angular error over the rotational angle;

Figure 10    a diagram showing a differential rotational angle over the rotational angle; and

Figure 11    a diagram of an angular error over the rotational angle.

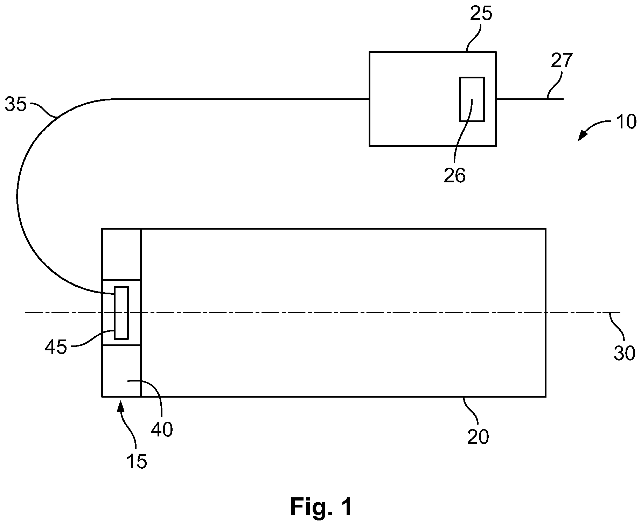

Figure 1 teaches a schematic view of a system 10.

The system 10 comprises a magnetic angle sensor device 15, a rotation element 20 and an evaluation device 25. The rotation element 20 is mounted to rotate about a rotational axis 30. The rotation element 20 may be a shaft, a motor element, a rotor of a motor or any other constructional element that may be rotated about the rotational axis 30. The evaluation device 25 is connected to the magnetic angle sensor device 15 via a data connection 35. The evaluation device 25 comprises an interface 26 which may be connected for example to a bus system 27 (not shown in Figure 1).

The system 10 shown in Figure 1 is schematic and preferably the magnetic angle sensor device 15, the evaluation device 25, the data connection 35 and the interface 26 are arranged on only one chip.

The magnetic angle sensor device 15 comprises an indication element 40 and a sensor array 45. The indication element 40 is mechanically connected to the rotation element 20.

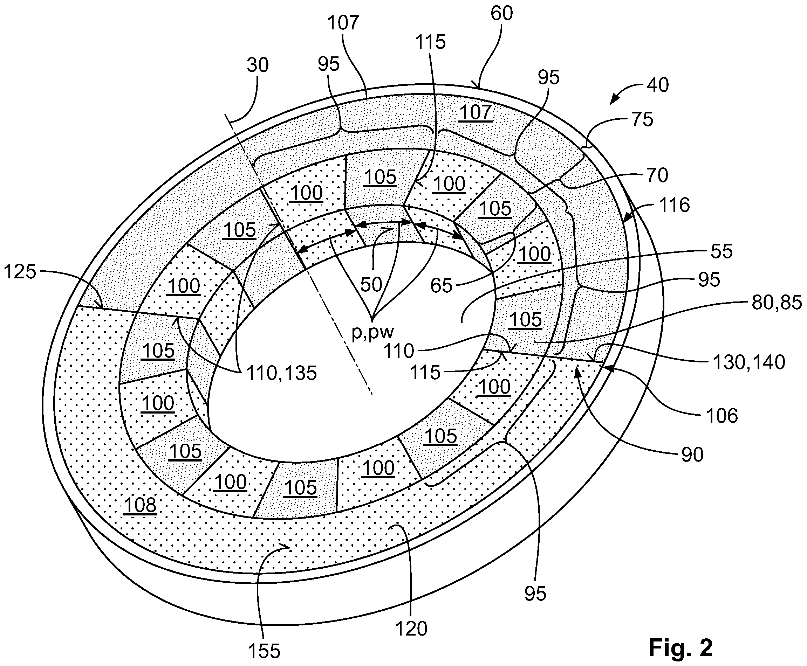

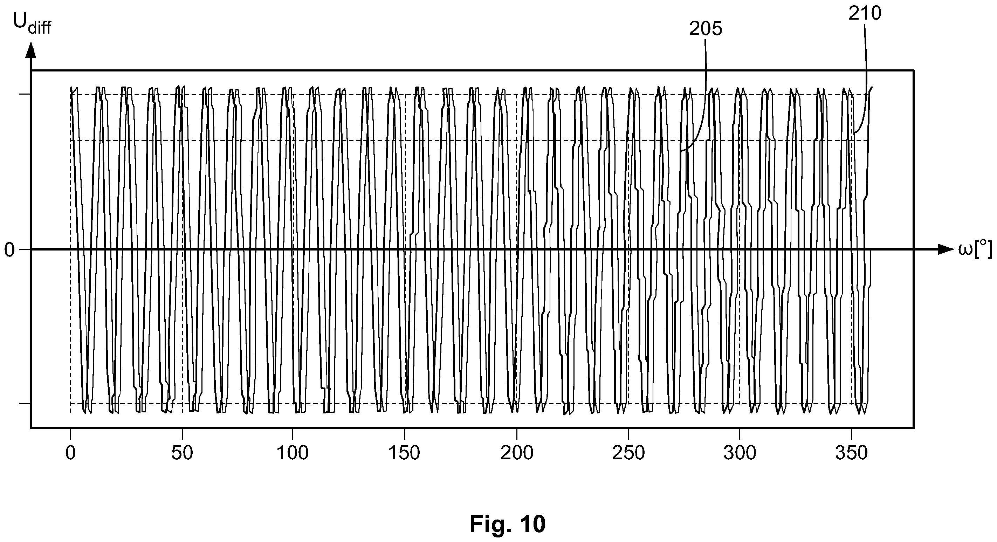

Figure 2 shows a perspective view of an embodiment of the indication element 40 of the system 10 shown in Figure 10.

The indication element 40 is, for example, ring-shaped and extends circumferentially about the rotational axis 30. Alternatively, the indication element 40 may be disc-shaped.

The indication element 40 comprises an inner circumferential side 50, facing the rotational axis 30 and an outer circumferential side 60 facing away from the rotational axis 30. The inner circumferential side 50 delimits an arrangement area 55 on the outside in a radial direction. The outer circumferential side 60 is arranged on the outside with respect to the inner circumferential side 50 in a radial direction with respect to the rotational axis 30.

The indication element 40 comprises a first section 65, a second section 70 and preferably a third section 75. The first section 65 extends in radial direction and is arranged next to the inner circumferential side 50. The first section extends outwardly towards the outer circumferential side 60. The first section 65 is preferably ring-shaped.

The second section 70 of the indication element 40 is arranged radial outwardly to the first section 65. The second section 70 is preferably ring-shaped and extends radially outwards. The first section 65 and the second section 70 may be embodied approximately with the same width in radial direction. The second section 70 can be arranged at the first section 65 or can be arranged in distance to the first section 65.

The third section 75 is preferably ring-shaped and is arranged radial outwardly to the second section 70 and extends radial outwardly in direction of the outer circumferential side 60 up to the outer circumferential side 60. The third section 75 may, in a radial direction be embodied slimmer than the first section 65 and/or the second section 70. The third section 75 can be arranged radial outwardly at the second section 70 or in distance to the second section 70.

The indication element 40 comprises a matrix material 80 and a filler material 85. The matrix material 80 extends continuously over the first section 65 and the second section 70 and is made in the first section 65 and the second section 70 from a one-piece and uniform material. The matrix material 80 may comprise at least one of the following materials: resin material, duroplastic, thermoplastic, epoxy resin.

The filler material 85 is magnetizable and is embedded in the matrix material 80. Embedded means that the filler material 85 is completely enclosed by the matrix material 80 on a periphery. The filler material 85 preferably comprises at least hard ferrite and/or NdFeB and/or SmCo. The filler material 85 may comprise particles which are mixed in the matrix material 80 and are embedded in the matrix material 80. The particle material may have a size of $0,1\ \mu m$ to $100\ \mu m$. A particle concentration of the filler material 85 over the first section 65 and the second section 70 may be identical. Preferably, the particle material is homogenous in size and magnetic properties.

In an alternative embodiment, the indication element 40 comprises for each first permanent magnetic section a partly ring-shaped permanent magnet and for example for the second section 70 a hollow shaped permanent magnet which are mounted together to the indication element 40

The third section 75 comprises a soft magnetic material, preferable steel, preferable a soft steel. The third section 75 is preferably made from a one-piece and uniform material and extends in circumferential direction with respect to the rotational axis 30 completely around the second section 70. Furthermore, the third section 75 may be materially connected to the second section 70 on the outside of the second section 70.

The filler material 85 of the first section 65 and the second section 70 is magnetized with different patterns.

The filler material 85 of the indication element 40 is magnetized in the first section 65 in such a way that the first section 65 comprises a first arrangement 90 having a first magnetization pattern having a first number of first permanent magnetic sections 95. For example, in Figure 2 the first arrangement 90 has a magnetization pattern of eight first permanent magnetic elements 95.

The first permanent magnetic section 95 comprises a first extension in circumferential direction with respect to the rotational axis 30. Each first permanent magnetic section 95 comprises a first pole 100 and a second pole 105. The first pole 100 may be, for example, a north pole, while the second pole 105 may be, for example, a south pole. Each first permanent magnetic section 95 is partially ring-shaped. The first permanent magnetic sections 95 complement each other to form the ring-shaped first section 65. The first pole 100 and the second pole 105 of a first permanent magnetic section can be arranged directly next to each other or in distance to each other. Furthermore, neighboured first permanent magnetic sections 95 can be arranged in distance or directly next to each other.

Each first permanent magnetic section 95 may be magnetized in such a way that the first pole 100 provides a magnetic field, which is directed at the inner circumferential side 50 towards the rotational axis 30, and that the second pole 105 is directed in an opposite direction of the first pole 100 at the inner circumferential side 50 and preferably is facing radially outwards away from the rotational axis 30.

Furthermore, the first permanent magnetic section 95 extends in circumferential direction between a first side face 110 and a second side face 115, wherein the second side face 115 is located at an offset with regard to the first side face 110 in circumferential direction with respect to the rotational axis 30. As a result, each of the first permanent magnetic sections 95 comprises a first extension in circumferential direction in relation to the rotational axis 30. The first extensions of the first permanent magnetic sections 95 may be identical.

Each of the first side face 110 and the second side face 115 may essentially extend in different planes, in each of which the rotational axis 30 is arranged. The first pole 100 is arranged at the first side face 110 and the second pole 105 is arranged at the second side face 115. The first permanent magnetic sections 95 are magnetized in such a way that each of the first permanent magnetic sections 95 may adjoin the first side face 110 and the second side face 115 of the first permanent magnetic section 95, which is next to the first permanent magnetic section 95. The first pole 100 and the second pole 105 extend in circumferential direction of a pole extension angle p with respect to the rotational axis 30. The pole extension angle p is defined as an angle with respect to the rotational axis 30 which the corresponding first pole 100 and/or second pole 105 includes. The first pole 100 and the second pole 105 extend in circumferential direction furthermore with a pole width pw. In an ideal case, 360° can be divided by the number of poles 100, 105 and the result is the pole extension p.

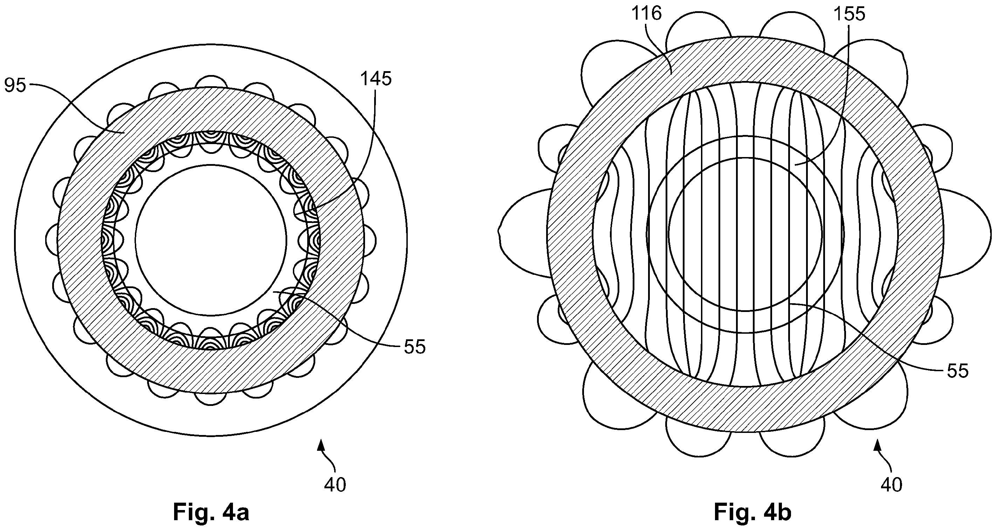

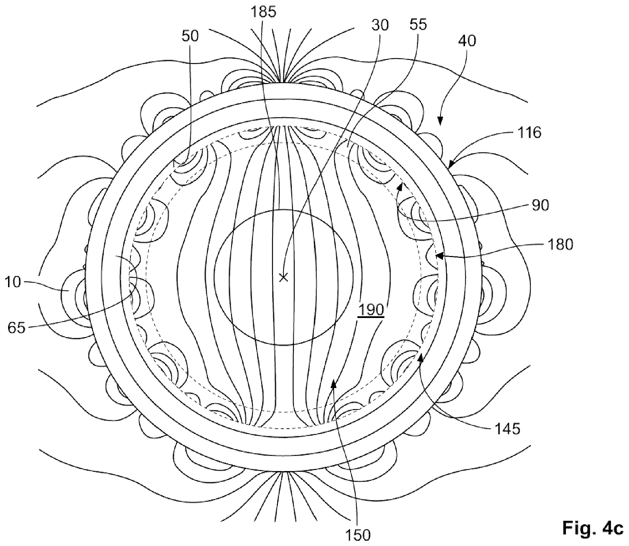

The first permanent magnetic sections 95 of the first arrangement 90 are magnetized and/or arranged in such a way that the first pole 100 and the second pole 105 are arranged periodically so that the first arrangement 90 of the first section 65 provides a multi-pole magnetic field 145 (cf. Figure 4) in the arrangement area 55.

The filler material 85 in the second section 70 is magnetized with a second magnetic pattern. The second magnetic pattern is different to the first magnetic pattern. The second magnetic pattern of the second section 70 comprises a second arrangement 116 having a second number of at least one second permanent magnetic section 120.

For example, in Figure 2, the second section 70 is magnetized in such a way that the second arrangement 116 has a hollow cylindrical shape and for example the second arrangement 116 comprises only one second permanent magnetic section 120 having a first pole 107 and a second pole 108. The first pole 107 of the second permanent magnetic section 120 may be, for example, a north pole, while the second pole 108 of the second permanent magnetic section 120 may be, for example, a south pole. The second arrangement 116 shown in Figure 2 is only an example. In a further embodiment, for example, the second magnetic pattern can be like a Halbach-arrangement.

In the embodiment shown in Figure 2, the first pole side 125 and the first side face 110 of the first permanent magnetic section 95 may be oriented in a first plane 135. In addition, the second pole side 130 and the second side face 115 and/or the first side face 110 of the first permanent magnetic section 95 may be oriented in a second plane 140. The first pole side 125, the second pole side 130 and the first side face 110 and/or the second side face 115 of one of the first permanent magnetic sections 95 are oriented in such a way that the rotational axis 30 may also extend in the first and second plane 135, 140.

The filler material 85 in the second section 70 is magnetized in such a way that the second arrangement 116 provides a homogenous magnetic field 150 in the arrangement area 55 (cf. Figure 4). The homogenous magnetic field 150 is provided inside of the second section 70 with respect to the rotational axis 30. The homogenous magnetic field 150 and the multi-pole magnetic field 145 are overlapped to an overall magnetic field 180 at least in the arrangement area 55. The third section 75 is preferably not magnetized and is embodied to shield the homogenous magnetic field radially outwards.

The magnetization of the filler material 85 can be in a way that there are further sections in which the filler material 85 is not magnetized and does not provide a contribution to the multi-pole magnetic field 145 or the homogenous magnetic field 150.

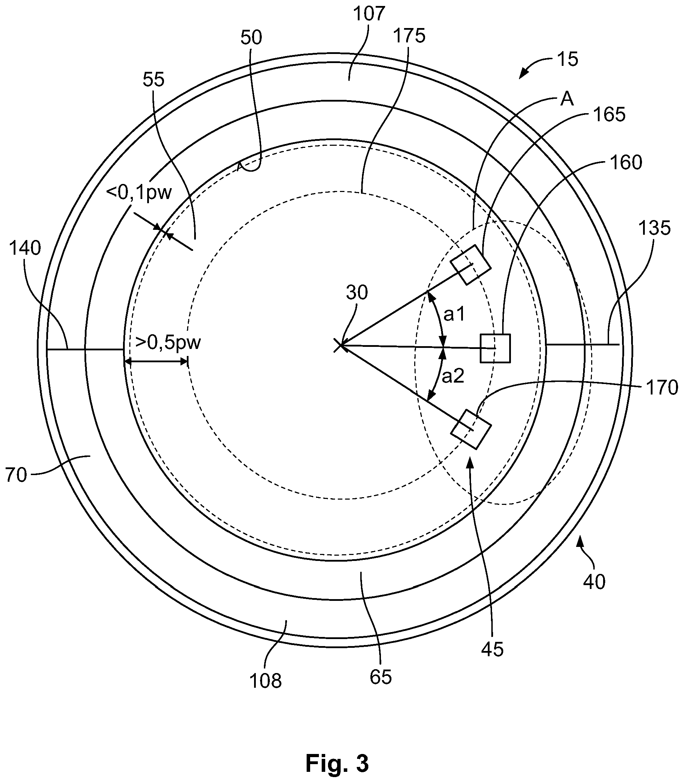

Figure 3 shows a front-view of the magnetic angle sensor device 15.

Preferably, the arrangement area 55 is arranged at least in a distance of 0,1 of the pole width pw. An inner maximum extend of the arrangement area 55 is preferably not greater than 0,5 the pole width pw.

The sensor array 45 is arranged in the arrangement area 55 radially inwards of the inner circumferential side 50 of the first section 65 and is spaced from the rotational axis 30. The sensor array 45 may be mechanically connected to a housing of the magnetic angle sensor device 15 and cannot rotate with the indication element 40 about the rotational axis 30. The sensor array 45 may be arranged having an axial overlap with the indication element 40 or with an axial offset from the indication element 40.

In the shown embodiment, the sensor array 45 comprises at least a first sensor element 160, a second sensor element 165 and a third sensor element 170. The sensor array 45 is arranged on a circle 175 with respect to the rotational axis 30. In particular, the first to third sensor element 160, 165, 170 is arranged on the same circle 175. The first sensor element 160 is arranged between the second sensor element 165 and the third sensor element 170 in circumferential direction with respect to the rotational axis 30.

A first sensor angle a1 between the second sensor element 165 and the first sensor element 160 with respect to the rotational axis 30 may be identical to a second sensor angle a2 between the first sensor element 160 and the third sensor element 170 with respect to the rotational axis 30 in such a way that the first sensor element 160 is arranged at the same distance between the second sensor element 165 and the third sensor element 170. In the shown embodiment, the first sensor angle a1 and the second sensor angle a2 are identical to the pole extension p.

The first sensor element 160 comprises a first orientation with respect to the circle 175. The second sensor element 165 is arranged in a second orientation with respect to the circle 175. The third sensor element 170 is arranged in a third orientation with respect to the circle 175.

In a preferred embodiment, each of the first to third sensors 160, 165, 170 is at least embodied to detect a direction of the overall magnetic field 180 in a plane, wherein, for example, the first to the third sensor element 160, 165, 170 may have, for example, a first main detection direction r and a second main detection direction t, wherein the second main detection direction t may be perpendicular to the first main detection direction r. For example, the first main detection direction r can be in radial direction and the second main detection direction t can be in circumferential direction.

Furthermore, each of the first to third sensors 160, 165, 170 can furthermore, for example, detect a magnetic field strength of the overall magnetic field 180 at the corresponding sensor element 160, 165, 170. Each sensor element 160, 165, 170 may be, for example, a linear field sensor. Each of the first to third sensors 160, 165, 170 is able detect a first magnetic field strength along the first main detection direction r and a second magnetic field strength along the second main detection direction t independently.

In a preferred embodiment, each of the first to third sensor elements 160, 165, 170 is arranged on the circle 175 in such a way that the first main detection direction r is tangential to the circle 175 and the second main detection direction t is oriented in the radial direction, such that every sensor element 160, 165, 170 is oriented differently with regard to the other sensor elements 160, 165, 170. Alternatively, the first to third orientations may be such that the first to the third orientations of the first to the third sensor element 160, 165, 170 are identical. In a preferred embodiment, the embodied sensor element 160, 165, 170 may determine a field strength of the magnetic field at the sensor element 160, 165, 170.

In the embodiment, each of the first to third sensor elements 160, 165, 170 provides a first sensor signal $U_{160,\ 165,\ 170,\ r}$ and a second sensor signal $U_{160,\ 165,\ 170,\ t}$. The first sensor signal $U_{160,\ 165,\ 170,\ r}$ corresponds to the direction of the overall magnetic field 180 in the first main detection direction r and a first field strength of the overall magnetic field 180 in the first main detection direction r. The second sensor signal $U_{160,\ 165,\ 170,\ t}$ corresponds to the direction of the overall magnetic field 180 in the second main detection direction t and a second field strength of the overall magnetic field 180 in the first main detection direction r. In other words, the two sensor signals $U_{160,\ 165,\ 170,\ r}$, $U_{160,\ 165,\ 170}$ form a vector $U_{160,\ 165,\ 170}$ which is proportional to the overall magnetic field 180 at the corresponding first to third sensor elements 160, 165, 170.

For example, the first sensor element 160 provides the first sensor signal $U_{160} = \left(\frac{U_{160,r}}{U_{160,t}}\right)$, the second sensor element 165 provides the second sensor signal $U_{165} = \left(\frac{U_{165,,r}}{U_{165,t}}\right)$ and the third sensor element 170 provides the third sensor signal $U_{170} = \left(\frac{U_{170,,r}}{U_{170,t}}\right)$

Figure 4a shows a front view of the indication element 40 with the multi-pole magnetic field 145 provided by a first arrangement 95 of the indication element 40.

In Figure 4a, magnetic field lines are shown to illustrate the multi-pole magnetic field 145 which mainly extends in the arrangement area 55. The field lines extend between the first pole 100 and the second pole 105 arranged next to the first pole 100.

Figure 4b shows a front view of the indication element with the homogenous magnetic field 150 provided by a second arrangement 116 of the indication element 40.

In Figure 4b, magnetic field lines are shown to illustrate the homogenous magnetic field 150 generated by the second arrangement 116. The homogenous magnetic field 150 runs in most areas radial inwardly the second section 70, especially in the arrangement area 55, parallel.

Figure 4c shows a front view of the indication element 40 with the overall magnetic field 180.

In Figure 4c, magnetic field lines are shown to illustrate the overall magnetic field 180.

The overall magnetic field 180 is created by the overlap of the multi-pole magnetic field 145 (shown in Figure 4a) and the homogenous magnetic field 150 (shown in Figure 4b).

The overall magnetic field 180 comprises a first magnetic field area 185 and a second magnetic field area 190. The first magnetic field area 185 is arranged around the rotational axis 30 and extends radially outwards towards the inner circumferential side 50. In the first magnetic field area 185, the overall magnetic field 180 is essentially homogenous so that magnetic field lines essentially run in parallel with regard to one another. In the first magnetic field area 185, the overall magnetic field 180 is mainly characterized by the homogenous magnetic field 150 provided by the second arrangement 116.

The second magnetic field area 190 extends in radial direction with respect to the rotational axis 30 between the first magnetic field area 185 and the inner circumferential side 50. In the second magnetic field area 190, the overall magnetic field 180 is characterized by the homogenous magnetic field 150 (shown in Figure 4b) and the multi-pole magnetic field 145 (shown in Figure 4a) provided by the first arrangement 90 and second arrangement 116. The arrangement area 55 is arranged in the second magnetic field area 190, so that the sensor array 45, shown in Figure 3, is arranged in the second magnetic field area 190 to detect the overall magnetic field 180 characterized by the homogenous magnetic field 150 and the multi-pole magnetic field 145.

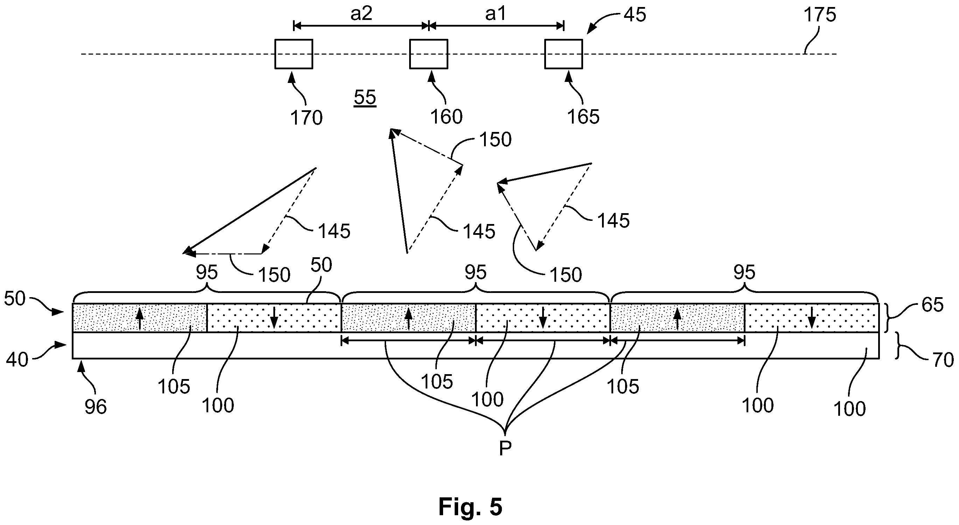

Figure 5 shows an unfolded view of an area A marked in Figure 3.

In Figure 5, arrows with dashed lines correspond to the strength and direction of the multi-pole magnetic field 145, shown at the corresponding sensor element 160, 165, 170. The arrows drawn with a dashed dotted line correspond to the homogenous magnetic field 150 of the second arrangement 116 at the corresponding sensor element 160, 165, 170. The arrows with a solid line symbolize the strength and the direction of the overall magnetic field 180 at the corresponding sensor element 160, 165, 170.

The first permanent magnetic sections 95 are magnetized in such a way that, for example, the multipole magnetic field 145 provided by each first pole 100 is directed from the arrangement area 55 into the first permanent magnetic section 95 via the first inner circumferential side 50. At the second pole 105, the magnetization is such that the multi-pole magnetic field 145 of the first arrangement 90 is directed at the inner circumferential side 50 out of the second pole 105 of the first permanent magnetic section 95. Furthermore, the arrangement of the first to third sensor element 160, 165, 170 is preferable in a way that the field vectors of the multi-pole field 145 are always pairwise antiparallel at the corresponding sensor elements 160, 165, 170 arranged next to each other.

The orientation of the indication element 40 may be given as a rotational angle w with respect to a reference orientation of the indication element 40. The overall magnetic field 180 carries two pieces of information, carried by the dipole magnet field 150 and the multi-pole magnetic field 145.

Each sensor element 160, 165, 170 is arranged in the arrangement area 55 and provides an information with the corresponding sensor signals $U_{160, 165, 170, r}$, $U_{160, 165, 170, t}$ about the direction and the field strength of the overall magnetic field 180 at the corresponding sensor element 160, 165, 170. The sensor array 45 provides this information via the data connection 35 to the evaluation device 25.

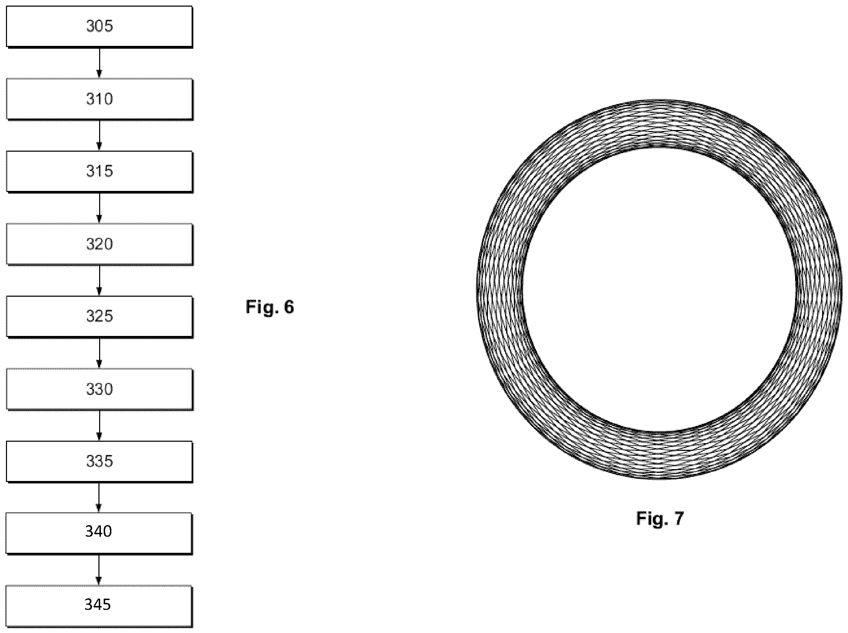

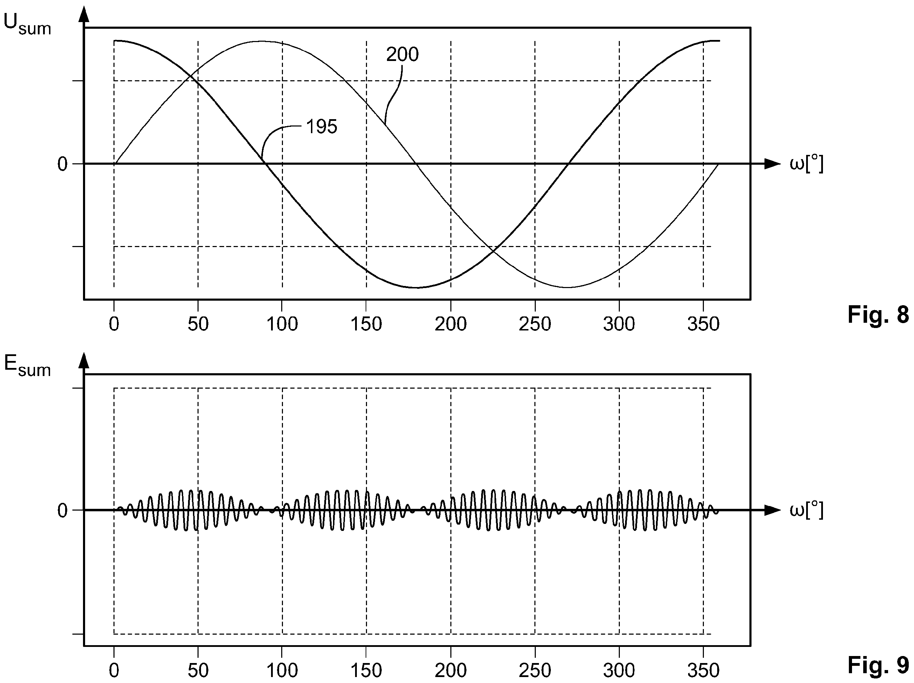

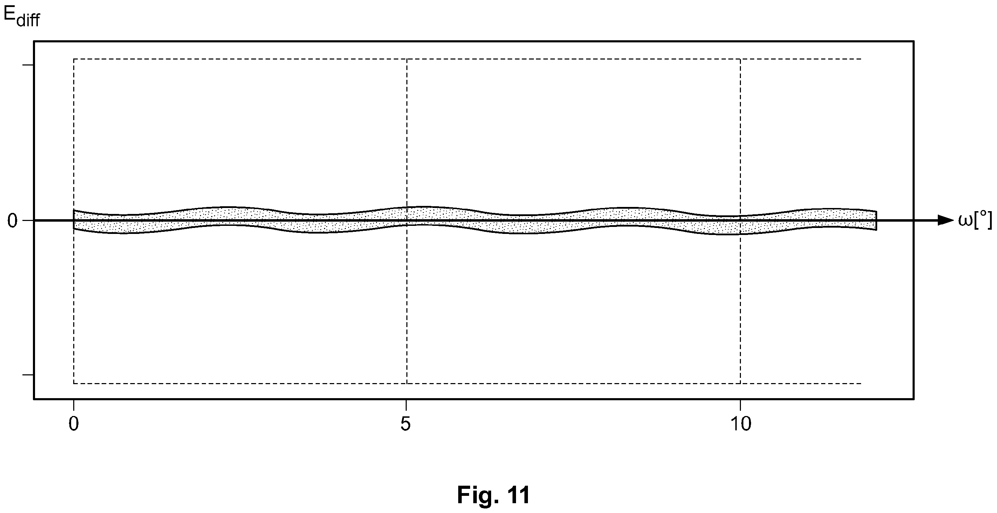

Figure 6 shows a flow chart of a method to determine the rotational angle w with the system 10 described in the figures 1 to 5. Figure 7 shows a Lissajous figure of the overall magnetic field 180. Figure 8 shows a diagram showing both component of the sum signal $U_{sum}$ over the rotational angle w calculated on basis of the individual sensor signals $U_{160, 165, 170, r}$, and $U_{160, 165, 170, t}$. Figure 9 shows a diagram of an angular error $E_{sum}$ over the rotational angle $\omega$. Figure 10 shows a diagram showing the two components of the differential signal $U_{diff}$ over the rotational angle w calculated on basis of the individual sensor signals $U_{160, 165, 170, r}$, and $U_{160, 165, 170, t}$. Figure 11 shows a diagram of angular error $E_{diff}$ over the rotational angle w.

In a first method step 305, the system 10 shown in the Figures 1 to 5 is provided. In addition, the rotation element 20 may be rotated together with the indication element 40 about the rotational axis 30 in the rotational angle $\omega$. The rotational angle w may be for example different to the reference orientation or may be the reference orientation of the indication element 40 with respect to the sensor array 45.

For a better understanding of the presented method, one rotational angle w is determined in quasi-stationary status of the rotation element 20. Of course, the presented method may be repeated periodically, to determine the current rotational angle of the rotation element during the rotation about the rotational axis 30 and for example to control the rotation by the information about the rotational angle $\omega$. The method is further illustrated on an example. In the example, the rotation element 20 is arranged at a rotational angle of 56° with respect to the reference orientation.

In a second method step 310, each sensor element 160, 165, 170 provides an information regarding the direction of the overall magnetic field 180 at the corresponding sensor element 160, 165, 170 via the data connection 35 to the evaluation device 25. The provided information corresponds to the solid line arrows shown in Figure 5.

Since, in the preferred embodiment, each sensor element 160, 165, 170 may be a sensor which is able to detect both field directions r and t. The direction $\omega_x$ of the overall magnetic field 180 at the corresponding sensor elements 160, 165, 170 may be derived from the sensor signals as:

$$\omega_x = tan^{-1}\left(\frac{U_{x,r}}{U_{x,t}}\right)$$

In the third method step 315, the evaluation device 25 calculates a first intermediate result by calculating the vector average $U_{av}$ of the direction of the overall magnetic field 180 at the sensor array 45 based on the direction of the overall magnetic field 180 at the second sensor element 165 and the direction of the overall magnetic field 180 at the third sensor element 170. The vector average $U_{av}$ may be an arithmetic vector average and the vector average $U_{av}$ is calculated component-by-component.

$$U_{av} = \frac{U_{165} + U_{170}}{2}$$

In a fourth method step 320, the evaluation device 25 calculates a vector sum $U_{sum}$ at the sensor element 160.

$$U_{sum} = U_{160} + U_{av}$$

The vector sum $U_{sum}$ corresponds to the sum of the first sensor signals $U_{160}$ of the first sensor element 160 corresponding to the strength and direction of the overall magnetic field 180 at the first sensor element 160 and the vector average $U_{av}$ determined in the third method step 315 (cf. Figure 8). The vector sum $U_{sum}$ corresponds to the homogenous magnetic field 150 at the first sensor element and to the dashed dotted arrow in Figure 5.

In Figure 8, a first graph 195 shows the result of the calculated vector sum $U_{sum}$ in the radial direction and a second graph 200 shows the result of the vector sum $U_{sum}$ in the tangential direction over the rotational angle.

In a fifth method step (325) the evaluation device 25 calculates a summarized rotational angle $\omega(U_{sum})$. The summarized rotational angle $\omega(U_{sum})$ corresponds to an arctangent of the vector sum.

$$\omega(U_{sum}) = tan^{-1}\left(\frac{U_{sum,r}}{U_{sum,t}}\right)$$

An angular position has to be calculated from the vector sum $U_{sum}$ in radial direction and the result of the vector sum $U_{sum}$ in the tangential direction. Comparing the calculated angular position with the target position results in a specified angular error $E_{sum}$ for the summarized rotational angle $\omega(U_{sum})$ is shown in Figure 9 over the rotational angle $\omega$.

For example, the summarized rotational angle $\omega(U_{sum})$ is 60°. The evaluation device 25 may provide the summarized rotational angle $\omega(U_{sum})$ at the interface 26. The summarized rotational angle $\omega(U_{sum})$ may be used to calculate roughly the circumferential orientation of the indication element.

In a sixth method step 330, the evaluation device 25 determines a vector difference $U_{diff}$ of the sensor signals corresponding to the overall magnetic field 185 at the first magnetic sensor element 160.

The vector difference $U_{diff}$ corresponds to the difference between the first sensor signals $U_{160}$ of the first sensor element 160 corresponding to the strength and direction of the overall magnetic field 180 at the first sensor element 160 and the vector average $U_{av}$ determined in the third method step 315. The vector difference $U_{diff}$ corresponds to the direction of the multi-pole magnetic field 145 at the first sensor element 160 and is shown in Figure 5 with dashed arrows.

$$U_{diff} = U_{160} - U_{av}$$

The vector difference $U_{diff}$ is calculated by component-by-component.

In a seventh method step 335 the evaluation device 25 determines a differential rotational angle $\omega(U_{diff})$. The differential rotational angle $\omega(U_{diff})$ may be determined by an arctangent of the vector difference.

$$\omega(U_{diff}) = tan^{-1}\left(\frac{U_{diff,r}}{U_{diff,t}}\right)$$

For example, the differential rotational angle $\omega(U_{diff})$ is in the example 9°.

In Figure 10, a third graph 205 shows the result of the vector difference $U_{diff}$ in radial direction and a fourth graph 210 shows the result of the vector difference $U_{diff}$ in tangential direction at the first sensor element 160 over the rotational angle $\omega$.

An angular position may be calculated from the vector difference $U_{diff}$ in radial direction and the result of the vector difference $U_{diff}$ in the tangential direction. Comparing the calculated angular position with the target position results in a specified angular error $E_{diff}$. The corresponding angular error $E_{diff}$ for the differential rotational angle $\omega(U_{Diff})$ is shown in Figure 11 over the rotational angle $\omega$.

In an eigth method step 340, the evaluation device 25 determines the rotational angle w of the indication element 40 with respect to the reference orientation on the basis of the summarized rotational angle $\omega(U_{sum})$ and the division of the first number of first permanent magnetic sections 95.

For this purpose, the evaluation device 25 uses an integer function int on the summarized rotational angle $\omega(U_{sum})$ (determined in the fifth method step 325) and the division of the first arrangement 90 to determine the number of fully past first permanent magnetic sections 95 at the first sensor element 160. In Figure 2, the first arrangement 90 comprises for example eight first permanent magnetic sections 95.

In the fifth method step 320, the summarized rotational angle $\omega(U_{sum})$ in the example is 60°. The result of the integer function would be 1, so that one first permanent magnetic section fully past first sensor element 160.

In order to determine the rotational angle $\omega$, the evaluation device 25 multiplies the result of the integer function with the first extension and summarizes the result of the multiplication with the differential rotational angle $\omega(U_{diff})$.

$\omega$ = int($\omega(U_{sum})$, first extension of the first permanent magnetic section 95) * first extension of the first permanent magnetic section 95) + $\omega(U_{diff})$

In the example: w = int(60°, 45° (first extension of the first permanent magnetic section 95)) * 45°(first extension of the first permanent magnetic section 95) + 9° = 56°

In a ninth method step 345, the evaluation device 25 provides at least an information regarding the determined rotational angle w at the interface 26 to the bus system 27. The rotational angle w may be used to control the rotation of the rotation element 20.

The magnetic angle sensor device 15 may preferably be used as an end of shaft (EOS) sensor to provide a feedback with a high accuracy and a high resolution via, for example, a full 360° rotation of the rotation element 20.

For example, the magnetic angle sensor device 15 may be used to provide a precise rotational angle w and therefore a position of the rotation element 20. In addition to the rotational angle $\omega$, the evaluation device 25 may determine, on the basis of the rotational angle $\omega$, a rotational speed information, for example, of an electric motor, in particular an AC motor, DC motor or a servo motor and/or a rotation speed information of an output shaft of a gear.

Furthermore, in robotics, the magnetic angle sensor device 15 may be used for controlling a movement of, for example, a robotic arm and controlling of a positioning in of the robotic arm and/or an automated machinery.

For example, in a CNC machinery, the system 10 provides a precise control and positioning in computer numerical control machines used in manufacturing.

In medical equipment, the system 10 may be used, for example, in the same manner as in surgical robots and in imaging systems for precise movement and positioning.

In elevators and escalators, the system 10 described above may ensure a smooth and accurate operation by monitoring a motor speed and a position. may

In industrial automation, the system 10 may be used in conveyors, assembly lines and other automated systems for an accurate motion control.

Also, in heavy machinery, the monitoring of the rotation and positioning in construction and mining equipment is better with the above-described system 10.

Also, the system 10 may be used for measuring a rotational speed of turbine plates and/or a positioning of the rotor gondola and/or the turbine plates.

In agricultural equipment, the above-described system 10 may be used in tractors and harvesters for an accurately controlling and monitoring of said agricultural equipment. Also, in packaging machines, the system 10 may be used for an accurate control of the packaging processes to ensure a correct labelling and packaging of products.

In marine applications, the system 10 may be used in positioning systems for ships and other marine vehicles.

The magnetic arrangement having the first and second arrangement 90, 116 in the first section 65 and the second section 70 provides an efficient and inexpensive and easily manufacturable indication element 40, which may be manufactured, for example, by injection molding technology.

The indication element 40 is very robust, particularly with respect to any type of fluid. Therefore, the indication element 40 and the system 10 are very usable in automotive designs, especially may in wet and/or hot conditions.

In a further embodiment, the sensor array 45 may be implemented as a single chip design using an indication element 40 with a simple ring-shape but the above-described magnetization, making it a very attractive solution.

The axial height of the indication element 40 with respect to the rotational axis 30 may be easily adjusted by adopting an axial length of the indication element 40 to compensate for airgap variations in the system 10. Furthermore, to compensate for example a lateral offset, a further sensor array 45 can be arranged with an 180° offset around the rotational axis 30.

The third section 75 of the indication element 40, for example, may provide a good shielding for the first and second section 65, 70 to provide an accurate rotational angle w even in harsh environments. The system 10 and the method described above are robust against stray fields.

ASIL-D with redundant sensor components is also possible.

List of Reference Signs

| 10 | system |
| 15 | magnetic angle sensor device |
| 20 | rotation element |
| 25 | evaluation device |
| 26 | interface |
| 27 | bus system |
| 30 | rotation axis |
| 35 | data connection |

| 40 | indication element |
| 45 | sensor array |
| 50 | inner circumferential side |
| 55 | arrangement area |
| 60 | outer circumferential side |
| 65 | first section |
| 70 | second section |
| 75 | third section |
| 80 | matrix material |
| 85 | filler material |
| 90 | first arrangement |
| 95 | first permanent magnetic section |
| 100 | first pole (of the first permanent magnetic section) |
| 105 | second pole (of the first permanent magnetic section) |
| 107 | first pole (of the second permanent magnetic section) |
| 108 | second pole (of the second permanent magnetic section) |
| 110 | first side face |
| 115 | second side face |
| 116 | second arrangement |
| 120 | second permanent magnetic section |
| 125 | first pole side |
| 130 | second pole side |
| 135 | first plane |
| 140 | second plane |
| 145 | multi-pole magnetic field |
| 150 | homogenous magnetic field |
| 155 | front face |
| 160 | first sensor element |
| 165 | second sensor element |
| 170 | third sensor element |
| 175 | circle |
| 180 | overall magnetic field |
| 185 | first magnetic field area |
| 190 | second magnetic field area |
| 195 | first graph |
| 200 | second graph |
| 205 | third graph |
| 210 | fourth graph |
| | |
| 305 | first method step |
| 310 | second method step |
| 315 | third method step |
| 320 | fourth method step |
| 325 | fifth method step |
| 330 | sixth method step |
| 335 | seventh method step |
| 340 | eighth method step |
| 345 | ninth method step |
| | |
| a1 | first sensor angle |
| a2 | second sensor angle |
| | |
| $E_{diff}$ | angular error |
| $E_{sum}$ | angular error |

| int | integer function |
| p | pole extension |
| $\tan^{-1}(U_{sum})$ | arctangent of the summarized direction |
| $\tan^{-1}(U_{diff})$ | arctangent of the differential direction |
| $U_{av}$ | average direction |
| $U_{sum}$ | vector sum |
| $U_{diff}$ | vector difference |
| $\omega$ | rotation angle |
| $\omega(U_{diff})$ | differential rotational angle |
| $\omega(U_{sum})$ | summarized rotational angle |

**Claims**

1. A magnetic angle sensor device (15),

   - comprising a sensor array (45) and an indication element (40), which is arranged to rotate about a rotational axis (30),
   - wherein the indication element (40) comprises a first section (65) and a second section (70),
   - wherein the first section (65) is arranged on the inside of the second section (70),
   - wherein the first section (65) comprises a first arrangement (90) with a plurality of first permanent magnetic sections (95) and the second section (70) comprises a second arrangement (116) with at least a second permanent magnetic section (120),
   - wherein each of the first permanent magnetic sections (95) has a first magnetization pattern,
   - wherein the first permanent magnetic sections (95) of the first arrangement (90) are arranged periodically in circumferential direction with respect to the rotational axis (30), so that the first arrangement (90) provides a multi-pole magnetic field (145) in an arrangement area (55),
   - wherein the second permanent magnetic section (120) has a second magnetization pattern, so that the second arrangement (116) provides a homogenous magnetic field (150) in the arrangement area (55),
   - wherein the multi-pole magnetic field (145) and the dipole magnetic field (150) interact in the arrangement area (55) to an overall magnetic field (180),
   - wherein the sensor array (45) is arranged in the arrangement area (55) to detect the overall magnetic field (180) and is embodied to provide at least an information in response to a circumferential orientation of the indication element (40).

2. The magnetic angle sensor device (15) according to claim 1,

   - wherein the second arrangement (116) is a Halbach-arrangement of the second permanent magnetic section (120) or is a dipole arrangement of the second permanent magnetic section (120).

3. The magnetic angle sensor device (15) according to any one of the preceding claims,

   - wherein the indication element (40) comprises a third section (75),
   - wherein the third section (75) is ring-shaped,
   - wherein the third section (75) is arranged radially on the outside of the second section (70) and the second section (70) is in contact with the third section (75),
   - wherein the third section (75) outwardly shields the second section (70).

4. The magnetic angle sensor device (15) according to any one of the preceding claims,

   - wherein the indication element (40) comprises a matrix material (80) and a magnetizable filler material (85),
   - wherein the magnetizable filler material (85) is embedded in the matrix material (80),
   - wherein the magnetizable filler material (85) preferably comprises at least hard ferrite and/or NdFeB and/or SmCo,
   - wherein the matrix material (80) and the magnetizable filler material (85) extend over the first section (65) and the second section (70) of the indication element (40),
   - wherein the matrix material (80) is made from one-piece and uniform material.

5. The magnetic angle sensor device (15) according to claim 4,

   - wherein the filler material (85) in the first section (65) is magnetized with the first magnetic pattern and the filler material (85) in the second section (70) is magnetized with the second magnetic pattern.

6. The magnetic angle sensor device (15) according to any of the claims 3 to 5,

   - wherein the third section (75) comprises a soft magnetic material, preferably a steel, preferably a soft steel,
   - wherein the third section (75) is made from a one-piece and uniform material and extends completely around the second section (70) in circumferential direction with respect to the rotational axis (30).

7. The magnetic angle sensor device (15) according to any one of the preceding claims,

   - wherein the indication element (40) is disc-shaped or ring-shaped,
   - wherein the sensor array (45) is arranged radially between the rotational axis (30) and the first section (65).

8. The magnetic angle sensor device (15) according to any one of the preceding claims,

   - wherein the overall magnetic field (180) comprises a first magnetic field area (185) and a second magnetic field area (190),
   - wherein the first magnetic field area (185) is arranged radially inwards at the rotational axis (30) and the second magnetic field area (190) is arranged radially outwards with regard to the first magnetic field area (185),
   - wherein the overall magnetic field (180) is essentially homogeneous in the first magnetic field area (185),
   - wherein the sensor array (45) is arranged in the second magnetic field area (190).

9. The magnetic angle sensor device (15) according to one of the preceding claims,

   - wherein the sensor array (45) comprises at least a first sensor element (160), a second sensor element (165) and a third sensor element (170),
   - wherein the sensor elements (160, 165, 170) are arranged on a circle (175) around the rotational axis (30),
   - wherein each sensor element (160, 165, 170) is embodied to provide at least a sensor signal, preferably two sensor signals ($U_{160, 165, 170, r}$, $U_{160, 165, 170, t}$), corresponding to the overall magnetic field (180) at the corresponding sensor element (160, 165, 170).

10. The magnetic angle senor device (15) according to claim 9,

   - wherein the first sensor element (160) is arranged in circumferential direction in an identical sensor angle (a1, a2) between the second sensor element (165) and the third sensor element (170) with respect to the rotational axis (30),
   - wherein a first pole (100) and/or a second pole (105) of the first permanent magnetic section (95) extend in circumferential direction in a pole extension (p) with respect to the rotational axis (30),
   - wherein the sensor angle (a1, a2) is identical to the pole extension (p).

11. The magnetic angle sensor device (15) according to one of the preceding claims,

- wherein the first pole (100) and/or the second pole (105) of the first permanent magnetic section (95) extend in circumferential direction with a pole width (pw),

- wherein the arrangement area (55) is arranged in distance to the first permanent magnetic section (95),

- wherein preferably the arrangement area (55) is at least arranged in a distance of 0,1 of the pole width (pw),

- wherein preferably an inner maximum extend of the arrangement area (55) with respect to the first permanent magnetic section (95) is preferable less than 0,5 the pole width (pw).

12. A method using a magnetic angle sensor device (15),

- wherein the magnetic angle sensor device (15) according to any one of the previous claims is provided,

- wherein the rotation element (20) is connected to the indication element (40),

- wherein the sensor array (45) provides at least a sensor signal,

- wherein a rotational angle ($\omega$) of the indication element (40) with respect to a reference orientation is determined on the basis of the sensor signal,

- wherein an information regarding the rotational angle ($\omega$) is provided.

13. The method according to claim 12,

- wherein the magnetic angle sensor device (15) according to any one of the claims 9 to 10 is provided,

- wherein each of the first to third sensor elements (160, 165, 170) provides two sensor signals ($U_{160, 165, 170, r}$, $U_{160, 165, 170, t}$),

- wherein a vector average ($U_{av}$) of the overall magnetic field (180) at the sensor array (45) is determined on the basis of the two sensor signals ($U_{165, r}$, $U_{165, t}$) of the second sensor element (165) and the two sensor signals ($U_{170, r}$, $U_{170, t}$) the third sensor element (170),

- wherein a vector sum ($U_{sum}$) at the first sensor element (160) is determined on the basis of a sum of the sensor signals ($U_{160, r}$, $U_{160, t}$) of the first sensor element (160) and the vector average ($U_{av}$),

- wherein a summarized rotational angle ($\omega$ ($U_{sum}$)) is determined on the basis of an arctangent of the vector sum ($tan^{-1}$ ($U_{sum}$)).

14. The method according to claim 13,

- wherein a vector difference ($U_{diff}$) at the first sensor element (160) is determined on basis of the sensor signals ($U_{160, r}$, $U_{160, t}$) of the first sensor element (160) and the vector average ($U_{av}$)

- wherein a differential rotational angle ($\omega(U_{diff})$) is determined based on an arctangent of the vector difference ($tan^{-1}$ ($U_{diff}$)).

**Amended claims in accordance with Rule 137(2) EPC.**

1. A magnetic angle sensor device (15),

- comprising a sensor array (45) and an indication element (40), which is arranged to rotate about a rotational axis (30),

- wherein the indication element (40) is ring-shaped and comprises a first section (65) and a second section (70),

- wherein the first section (65) is arranged on the inside of the second section (70),

- wherein the first section (65) comprises a first arrangement (90) with a plurality of first permanent magnetic sections (95) and the second section (70) comprises a second arrangement (116) with at least a second permanent magnetic section (120),

- wherein each of the first permanent magnetic sections (95) has a first magnetization pattern,

- wherein the first permanent magnetic sections (95) of the first arrangement (90) are arranged periodically in circumferential direction with respect to the rotational axis (30), so that the first arrangement (90) provides a multi-pole magnetic field (145) in an arrangement area (55),

- wherein the indication element (40) comprises an inner circumferential side (50), facing the rotational axis (30) and an outer circumferential side (60) facing away from the rotational axis (30),

- wherein the inner circumferential side (50) delimits the arrangement area (55) on the outside in a radial direction,

- wherein the second permanent magnetic section (120) has a second magnetization pattern, so that the second arrangement (116) provides a homogenous magnetic field (150) in the arrangement area (55),

- wherein the multi-pole magnetic field (145) and the dipole magnetic field (150) interact in the arrangement area (55) to an overall magnetic field (180),

- wherein the sensor array (45) is arranged radially between the rotational axis (30) and the first section (65) and has an axial overlap with the indication element (40),

- wherein the sensor array (45) is arranged in the arrangement area (55) to detect the overall magnetic field (180) and is embodied to provide at least an information in response to a circumferential orientation of the indication element (40).

2. The magnetic angle sensor device (15) according to claim 1,

- wherein the second arrangement (116) is a Halbach-arrangement of the second permanent magnetic section (120) or is a dipole arrangement of the second permanent magnetic section (120).

3. The magnetic angle sensor device (15) according to any one of the preceding claims,

- wherein the indication element (40) comprises a third section (75),
- wherein the third section (75) is ring-shaped,
- wherein the third section (75) is arranged radially on the outside of the second section (70) and the second section (70) is in contact with the third section (75),
- wherein the third section (75) outwardly shields the second section (70).

4. The magnetic angle sensor device (15) according to any one of the preceding claims,

- wherein the indication element (40) comprises a matrix material (80) and a magnetizable filler material (85),
- wherein the magnetizable filler material (85) is embedded in the matrix material (80),
- wherein the magnetizable filler material (85) preferably comprises at least hard ferrite and/or NdFeB and/or SmCo,
- wherein the matrix material (80) and the magnetizable filler material (85) extend over the first section (65) and the second section (70) of the indication element (40),
- wherein the matrix material (80) is made from one-piece and uniform material.

5. The magnetic angle sensor device (15) according to claim 4,

- wherein the filler material (85) in the first section (65) is magnetized with the first magnetic pattern and the filler material (85) in the second section (70) is magnetized with the second magnetic pattern.

6. The magnetic angle sensor device (15) according to any of the claims 3 to 5,

- wherein the third section (75) comprises a soft magnetic material, preferably a steel, preferably a soft steel,
- wherein the third section (75) is made from a one-piece and uniform material and extends completely around the second section (70) in circumferential direction with respect to the rotational axis (30).

7. The magnetic angle sensor device (15) according to any one of the preceding claims,

- wherein the overall magnetic field (180) comprises a first magnetic field area (185) and a second magnetic field area (190),
- wherein the first magnetic field area (185) is arranged radially inwards at the rotational axis (30) and the second magnetic field area (190) is arranged radially outwards with regard to the first magnetic field area (185),
- wherein the overall magnetic field (180) is essentially homogeneous in the first magnetic field area (185),
- wherein the sensor array (45) is arranged in the second magnetic field area (190).

8. The magnetic angle sensor device (15) according to one of the preceding claims,

- wherein the sensor array (45) comprises at least a first sensor element (160), a second sensor element (165) and a third sensor element (170),
- wherein the sensor elements (160, 165, 170) are arranged on a circle (175) around the rotational axis (30),
- wherein each sensor element (160, 165, 170) is embodied to provide at least a sensor signal, preferably two sensor signals ( $U_{160, 165, 170, r}$, $U_{160, 165, 170, t}$), corresponding to the overall magnetic field (180) at the corresponding sensor element (160, 165, 170).

9. The magnetic angle senor device (15) according to claim 8,

- wherein the first sensor element (160) is arranged in circumferential direction in an identical sensor angle (a1, a2) between the second sensor element (165) and the third sensor element (170) with respect to the rotational axis (30),
- wherein a first pole (100) and/or a second pole (105) of the first permanent magnetic section (95) extend in circumferential direction in a pole extension (p) with respect to the rotational axis (30),
- wherein the sensor angle (a1, a2) is identical to the pole extension (p).

**10.** The magnetic angle sensor device (15) according to one of the preceding claims,

- wherein the first pole (100) and/or the second pole (105) of the first permanent magnetic section (95) extend in circumferential direction with a pole width (pw),
- wherein the arrangement area (55) is arranged in distance to the first permanent magnetic section (95),
- wherein preferably the arrangement area (55) is at least arranged in a distance of 0,1 of the pole width (pw),
- wherein preferably an inner maximum extend of the arrangement area (55) with respect to the first permanent magnetic section (95) is preferable less than 0,5 the pole width (pw).

**11.** A method using a magnetic angle sensor device (15),

- wherein the magnetic angle sensor device (15) according to any one of the previous claims is provided,
- wherein the rotation element (20) is connected to the indication element (40),
- wherein the sensor array (45) arranged in the arrangement area (55) detects the overall magnetic field (180) and provides a sensor signal with an information in response to a circumferential orientation of the indication element (40),
- wherein a rotational angle ($\omega$) of the indication element (40) with respect to a reference orientation is determined on the basis of the sensor signal,
- wherein an information regarding the rotational angle ($\omega$) is provided.

**12.** The method according to claim 11,

- wherein the magnetic angle sensor device (15) according to any one of the claims 9 to 10 is provided,
- wherein each of the first to third sensor elements (160, 165, 170) provides two sensor signals ($U_{160, 165, 170, r}$, $U_{160, 165, 170, t}$),
- wherein a vector average ($U_{av}$) of the overall magnetic field (180) at the sensor array (45) is determined on the basis of the two sensor signals ($U_{165, r}$, $U_{165, t}$) of the second sensor element (165) and the two sensor signals ($U_{170, r}$, $U_{170, t}$) the third sensor element (170),
- wherein a vector sum ($U_{sum}$) at the first sensor element (160) is determined on the basis of a sum of the sensor signals ($U_{160, r}$, $U_{160, t}$) of the first sensor element (160) and the vector average ($U_{av}$),
- wherein a summarized rotational angle ($\omega$ ($U_{sum}$)) is determined on the basis of an arctangent of the vector sum ($\tan^{-1}$ ($U_{sum}$)).

**13.** The method according to claim 12,

- wherein a vector difference ($U_{diff}$) at the first sensor element (160) is determined on basis of the sensor signals ($U_{160, r}$, $U_{160, t}$) of the first sensor element (160) and the vector average ($U_{av}$)
- wherein a differential rotational angle ($\omega$($U_{diff}$)) is determined based on an arctangent of the vector difference ($\tan^{-1}$ ($U_{diff}$)).

**Fig. 1**

Fig. 2

**Fig. 3**

Fig. 4b

Fig. 4a

Fig. 4c

**Fig. 5**

Fig. 7

Fig. 6

305 → 310 → 315 → 320 → 325 → 330 → 335 → 340 → 345

Fig. 8

Fig. 9

EP 4 764 419 A1

**Fig. 10**

EP 4 764 419 A1

**Fig. 11**

EP 4 764 419 A1

Europäisches
Patentamt
European
Patent Office
Office européen
des brevets

## EUROPEAN SEARCH REPORT

**Application Number**

EP 24 22 1870

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/091316 A1 (SANTOS ALFRED JOHN [US] ET AL) 9 April 2009 (2009-04-09) | 1,2,7-14 | INV. G01D5/14 |
| Y | * figures 1, 9 * <br> * claims 1, 8 * <br> * paragraphs [0007], [0030] - [0032] * | 2-6 | |
| | ----- | | |
| X | US 11 378 421 B2 (TIMKEN CO [US]) 5 July 2022 (2022-07-05) | 1,7-14 | |
| Y | * figures 7-9 * <br> * claims 1-3 * | 2-6 | |
| | ----- | | |
| Y | US 10 361 617 B2 (MAHLE INT GMBH [DE]) 23 July 2019 (2019-07-23) <br> * figures 2a-c, 3a-3c * <br> * claim 14 * | 2 | |
| | ----- | | |
| Y | DE 10 2022 202399 A1 (BRUKER BIOSPIN GMBH [DE]) 14 September 2023 (2023-09-14) <br> * figure 1b * <br> * paragraph [0068] * <br> * claims 1, 4 * | 2 | TECHNICAL FIELDS SEARCHED (IPC) |
| | ----- | | G01D |
| Y | US 11 815 574 B2 (NANALYSIS CORP [CA]) 14 November 2023 (2023-11-14) <br> * figure 3C * | 2 | |
| | ----- | | |
| Y | US 2018/087926 A1 (AUSSERLECHNER UDO [AT]) 29 March 2018 (2018-03-29) <br> * paragraphs [0056], [0097], [0128] * | 4,5 | |
| | ----- | | |
| A | US 2017/322014 A1 (JEON JAE WOOK [KR] ET AL) 9 November 2017 (2017-11-09) <br> * figure 2 * <br> * paragraphs [0006], [0051] * | 1-14 | |
| | ----- | | |

The present search report has been drawn up for all claims

| Place of search | Date of completion of the search | Examiner |
|---|---|---|
| Munich | 23 May 2025 | Kuchenbecker, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 24 22 1870

This annex lists the patent family members relating to the patent documents cited in the above-mentioned European search report.
The members are as contained in the European Patent Office EDP file on
The European Patent Office is in no way liable for these particulars which are merely given for the purpose of information.

23-05-2025

| Patent document cited in search report | | Publication date | Patent family member(s) | | Publication date |
|---|---|---|---|---|---|
| US 2009091316 | A1 | 09-04-2009 | CN | 101421589 A | 29-04-2009 |
| | | | EP | 2005118 A2 | 24-12-2008 |
| | | | JP | 5273481 B2 | 28-08-2013 |
| | | | JP | 2009533688 A | 17-09-2009 |
| | | | KR | 20090005319 A | 13-01-2009 |
| | | | US | 2009091316 A1 | 09-04-2009 |
| | | | WO | 2007121192 A2 | 25-10-2007 |
| US 11378421 | B2 | 05-07-2022 | EP | 3559602 A1 | 30-10-2019 |
| | | | EP | 4060292 A1 | 21-09-2022 |
| | | | US | 2019285439 A1 | 19-09-2019 |
| | | | US | 2021072049 A1 | 11-03-2021 |
| | | | WO | 2018118399 A1 | 28-06-2018 |
| US 10361617 | B2 | 23-07-2019 | DE | 102014224151 A1 | 02-06-2016 |
| | | | US | 2017317573 A1 | 02-11-2017 |
| | | | WO | 2016083096 A1 | 02-06-2016 |
| DE 102022202399 | A1 | 14-09-2023 | DE | 102022202399 A1 | 14-09-2023 |
| | | | EP | 4437353 A1 | 02-10-2024 |
| | | | WO | 2023170030 A1 | 14-09-2023 |
| US 11815574 | B2 | 14-11-2023 | AU | 2020339859 A1 | 07-04-2022 |
| | | | BR | 112022003496 A2 | 24-05-2022 |
| | | | CA | 3149279 A1 | 04-03-2021 |
| | | | CN | 114599984 A | 07-06-2022 |
| | | | EP | 4018214 A1 | 29-06-2022 |
| | | | GB | 2600884 A | 11-05-2022 |
| | | | GB | 2622337 A | 13-03-2024 |
| | | | JP | 2022545281 A | 26-10-2022 |
| | | | US | 2022276328 A1 | 01-09-2022 |
| | | | US | 2023314538 A1 | 05-10-2023 |
| | | | WO | 2021035346 A1 | 04-03-2021 |
| US 2018087926 | A1 | 29-03-2018 | DE | 102016118376 A1 | 29-03-2018 |
| | | | US | 2018087926 A1 | 29-03-2018 |
| US 2017322014 | A1 | 09-11-2017 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022152996 A

- US 20080231262 A1